# EUROPÄISCHE PATENTSCHRIFT

(11) **EP 1 196 812 B1**
(45) Veröffentlichungstag und Bekanntmachung des Hinweises auf die Patenterteilung: **30.08.2006**
(21) Anmeldenummer: 99973634.1
(22) Anmeldetag: 21.01.1999
(51) Int. Cl.: G02F 1/13

(54) **VERFAHREN ZUM BESTIMMEN VON FÜR DAS OPTISCHE VERHALTEN VON FLÜSSIGKRISTALL-ZELLEN CHARAKTERISTISCHEN BEIWERTEN**
METHOD FOR DETERMINING COEFFICIENTS CHARACTERISTIC OF THE OPTICAL BEHAVIOUR OF LIQUID CRYSTAL CELLS
PROCEDE POUR DETERMINER DES FACTEURS DE CORRECTION CARACTERISTIQUES DU COMPORTEMENT OPTIQUE DE CELLULES A CRISTAUX LIQUIDES

(43) Veröffentlichungstag der Anmeldung: 17.04.2002
(73) Patentinhaber: Autronic-Melchers GmbH, 76229 Karlsruhe (DE)
(72) Erfinder: BECKER, Michael, D-76135 Karlsruhe (DE); WÖHLER, Henning, D-76137 Karlsruhe (DE)
(74) Vertreter: Führing, Dieter
(86) Internationale Anmeldenummer: PCT/EP1999/000377
(87) Internationale Veröffentlichungsnummer: WO 2000/043829

(56) Entgegenhaltungen:
- EP-A- 0 349 006
- EP-A- 0 571 955
- EP-A- 0 711 818
- DE-A- 4 011 116
- DE-C- 19 602 862
- US-A- 3 711 181
- US-A- 5 570 215

## Beschreibung

Die Erfindung betrifft ein Verfahren gemäß dem Oberbegriff des Anspruches 1.

Ein solches Verfahren ist aus der DE-A-40 11 116 bekannt zum Bestimmen des Randanstellwinkels (des sog. Pretilt Angle oder Tilt-Bias Angle) an den beiden einander planparellel gegenüberliegenden Grenzschichten des Flüssiskristalls zu den Orientierungsschichten auf den elektrodenbeschichteten Zellgläsern einer Flüssigkristall-Zelle (Liquid Crystal Display, LCD) mit nicht-verschraubter Textur. Nach jenem Verfahren wird ein dichroitischer Farbstoff sowohl einer zu untersuchenden Testzelle wie auch einer separat beigestellten, baugleichen Vergleichszelle, die aber anstelle eines Flüssigkristalles eine isotrope Wirtssubstanz enthält, jeweils in solcher Menge zugesetzt, bis sich schließlich in beiden Zellen gleiche Absorption eingestellt hat. Beide Zellen werden dann parallel zu einander von polarisiertern Licht durchstrahlt. Durch den Einsatz der Vergleichszelle soll der Einfluß störender Begleiteffekte kompensiert werden, um den vom Bestrahlungswinkel abhängigen Extremwert der Transmission durch die Testzelle leichter lokalisieren zu können. Der durch Absorption bedingte Transmissionskurvenverlauf über dem Lichteinfallswinkel ist monoton; er weist in der Regel nur ein Extremum auf, keine gegeneinander versetzten, lokalen Maxima und Minima.

Es ist aber schon nur unter sehr großen Schwierigkeiten möglich, durch Farbstoffzugaben in beiden Zellen die gleiche Anfangs-Absorption zu erreichen, weil sich der ausgerichtete und der isotrope Zustand von vornherein nicht gleich verhalten. Außerdem beeinflussen solche Farbstoff-Anlagerungen die physikalischen Eigenschaften und somit das Verhalten der an sich allein interessierenden Flüssigkristall-Struktur. Hinzu kommt, daß mit der dort im Detail beschriebenen Absorptions-Extremwertsuche nur Tiltwinkel in verdrillungsfreien dicken Zellen (nämlich in der Größenordnung oberhalb 20 µm Schichtdicke des Flüssigkristalls) erfaßt werden können - und auch das nur, wenn der Rand-Anstellwinkel in einem recht beschränkten Bereich um genau parallele oder um genau senkrechte Orientierung zur Glas-Grenzschicht liegt. Die Schichtdicke von Flüssigkristall-Anzeigezellen, wie sie heute in Serienproduktion hergestellt werden, liegt aber um eine Größenordnung darunter, nämlich bei etwa 4 µm bis 5 µm. Auch können nach diesem Verfahren keine aus der laufenden Fertigung entnehmbaren Zellen auf Einhalten eines gewünschten Anstellwinkels überprüft werden, weil funktionstüchtige, testfähige Zellen schon verschlossen (verklebt) sind, so daß ein nachträglicher Farbstoff-Zusatz sich nun verbietet. Dieses vorbekannte Verfahren mit der im Teststrahl um eine Achse verschwenkten, besonders präparierten dicken Flüssigkristallzelle ist somit für Meß- und Kontrollaufgaben in der Praxis, wie an realen Zellen und in Echtzeit unter der laufenden Fertigung, nicht geeignet.

Man kann jedoch zeigen, daß sich als Maß für den Grenzflächen-Anstellwinkel auf der Orientierungsschicht für die Flüssigkristall-Moleküle in der Zelle die Lage bzw. die Verschiebung eines Symmetriewinkels heranziehen läßt, der auf einstrahlwinkelabhängige Effekte der Doppelbrechung zurückzuführen ist, also auf Änderungen der Transmission über dem Winkel des Lichteinfalls einer im Teststrahl zwischen gekreuzten Polarisatoren verschwenkten dicken Testzelle mit nicht-verschraubter Flüssigkristall-Textur. Der interessierende Rand-Anstellwinkel läßt sich dann aus einem, aus dem Kurvenverlauf ausgemessenen, Symmetrie-Offsetwinkelversatz berechnen. Bei dem handelt es sich um die von der Kristallrotation im Teststrahl abhängige Verschiebung eines Symmetriepunktes zwischen zwei aufeinanderfolgenden gleichsinnigen Extremwerten aus der Koordinaten-Nullachse heraus. Bei dieser Kristallrotations-Meßmethode muß allerdings berücksichtigt werden, daß eine geometrisch strenge Symmetrie im Kurvenverlauf tatsächlich nur bei nicht aus der Nullachse (Y-Achse) heraus verschobenem Symmetriepunkt gegeben ist, also bei verschwindend kleinem Rand-Anstellwinkel (Tiltwinkel) in der Zelle. Nur dann ist die Y-Achse auch die Symmetrieachse der Transmissionsverteilung. Abseits des Koordinaten-Nullpunktes wird die Symmetrie verzerrt. In der industriellen Praxis stört jedoch vor allem, daß für das geometrische Ausmessen der Lage der verschobenen Symmetrieachse wieder erst eine dicke Testzelle (mit typischem Glasplatten-Abstand von mehr als 20 µm) angefertigt werden müßte, so daß damit zwar eine bestimmte Fertigungstechnologie beurteilt werden kann, aber auch solch ein Verfahren nicht auf Stichproben aus der laufenden Fertigung - also auf die dünnen, real erstellten Display-Zellen - anwendbar ist.

Experimentell und auch durch numerische Modellberechnungen kann man zeigen, daß die beiden Extremwerte, zwischen denen - nach Maßgabe der Größe des Rand-Anstellwinkels in der Zelle aus der Y-Achse des Koordinatensystems verschoben - die gesuchte (Pseudo-)Symmetrieachse liegt, mit dünner werdender Flüssigkristallschicht immer weiter auseinander rükken. Mit abnehmender Dicke der Flüssigkristall-Schicht wandern die regulären Extrema der doppelbrechungsmodulierten Transmission schließlich aus dem Winkelbereich heraus, der noch vom Lichtstrahl überstrichen werden kann. Eine sehr dünne Flüssigkristallschicht hat nur noch einen schwach modulierten Meßkurvenverlauf zur Folge, der als Ausschnitt aus dem Transmissionsverlauf einer dicken Zelle erklärbar ist. Und auch die Pseudo-Symmetrieachse selbst verläßt mit größer werdendem Rand-Anstellwinkel den Bestrahlungswinkelbereich, der noch vom Lichtstrahl überstrichen werden kann. Denn größere Abtast-Meßbereiche als etwa a +/- 70 Grad Lichteinfallswinkel sind in praktisch realisierbaren Geometrien aus apparativen Gründen kaum realisierbar, und damit lassen sich die bei Rand-Anstellwinkeln jenseits von etwa 13 Grad auftretenden Symmetrie-Offsets experimentell schon nicht mehr erfassen.

Jedenfalls ist im aufgenommenen Meßverlauf der bestrahlungswinkelabhängigen Transmission durch eine dünne Zelle der, gegenüber den Verhältnissen bei senkrechtem Lichteinfall, verschobene oder Pseudo- Symmetriewert mangels einrahmender Extrema kaum noch oder jedenfalls nicht mehr eindeutig aufzufinden. Hinzu kommt, daß, wie sich zeigen läßt, bei sehr dünnen Zellen (etwa um 5 µm und darunter) und bei kleinen Strahleinfallswinkeln der Transmissions-Verlauf zunehmend durch gewissermaßen "hochfrequent" erscheinende Intensitätsschwankungen der Transmission überlagert wird, die auf Interferenzen von bestrahlungswinkelabhängigen Mehrfachreflexionen an den Grenzflächen zwischen den Zellgläsern und der umgebenden Luft zurückzuführen sind. Diesem - die geometrische Auswertung des gemessenen Transmissionsverlaufes durch eine dünnere Zelle schon sehr erschwerenden - rauschähnlichen Effekt sind dann auch noch über dem Strahleinfallswinkel weniger "hochfrequente" Interferenzerscheinungen überlagert, die durch winkelabhängige Mehrfachreflexionen in der Flüssigkristallschicht selbst entstehen. Ferner können Einflüsse der transparenten Elektroden auf den inneren Zellenglasflächen hinzutreten, die gewöhnlich aus Indium-Zinn-Oxid (Indium Tin Oxyd; ITO) mit besonders hoher optischer Brechzahl bestehen, weshalb hier intensive Teilreflexionen ausgelöst werden können.

Solche dem eigentlich interessierenden Meßverlauf überlagerten Modulationen treten zwar grundsätzlich auch bei dicken Zellen auf, aber dort sind die zusätzlichen Effekte aufgrund - im Vergleich zu den Doppelbrechungsmodulationen - hoher Frequenzen und niedriger Amplituden kaum bemerkbar, sie behindern die Auswertung jedenfalls nicht. Bei einer dünnen Zelle dagegen ist ein durch solche Modulationen gerade im Bereich der Nullpunkts-Umgebung gestörter Kurvenverlauf (bei kleinem Offset des "Symmetriewinkels" aufgrund kleiner Werte des (Rand-)Anstellwinkels auf der Orientierungsschicht im Zelleninnern), nur noch erschwert oder sogar überhaupt nicht eindeutig auswertbar.

In Erkenntnis dieser einschränkenden Gegebenheiten liegt der Erfmdung die Aufgabe zugrunde, eine vergleichsweise rasch durchführbare und auch weitgehend automatisierbare, hoch auflösende sowie reproduzierbare Kennwertermittlung an realen Flüssigkristall-Zellen bis hin zu geringer Zellendicke und über den gesamten Bereich von in der Fertigungspraxis anzutreffenden Rand-Anstellwinkeln (d.h. zwischen Null und Neunzig Grad gegenüber der orientierungsbeschichteten Glasoberfläche) zu schaffen und dabei über die Bestimmung dieses Molekül-Anstellwinkels hinaus auch eine Bestimmung weiterer für das elektrooptische Verhalten der Zelle maßgeblicher Kennwerte wie insbesondere der Flüssigkristall-Schichtdicke zu eröffnen.

Diese Aufgabe ist gemäß dem kennzeichenden Teil des Hauptanspruchs gelöst. Zusätzlich zu einer bloßen Aufnahme des vom Einfallswinkel abhängigen Transmissionsverlaufes mittels eines mathematischen Modells für wenigstens das von der Doppelbrechung abhängige Verhalten des Flüssigkristalles in der Zelle wird eine Transmissionskurve berechnet und so lange mit veränderten Kennwerten immer wieder erneut berechnet, bis für die aktuelle Vorgabe von wenigstens einem bestimmten - darunter dann des real gesuchten - Kennwertes beide Kurvenverläufe hinreichend gut übereinstimmen; wobei in der Modellberechnung zur Verbesserung der Anpassungsgüte zusätzlich zu den Effekten der Doppelbrechung noch diejenigen der Mehrfachreflexionen in der Flüssigkristallschicht berücksichtigt werden können, wenn aufgrund einer zu dünnen Zelle die einfachere Modellrechnung sonst nicht so recht zum Erfolg hinsichtlich der geometrischen Anpassung an den Meßverlauf führt. Bei dieser Anpassung von gemessenen und berechneten Kurvenverläufen stören die parasitären Interferenzen, die eine geometrische Auswertung eines gemessenen Verlaufes gerade bei dünner Zelle unmöglich machen können, nun überhaupt nicht mehr, weil über die Doppelbrechungseinflüsse hinaus auch noch bestimmte andere Einflüsse wie insbesondere die auf Mehrfachreflexionen zurückgehenden in die Modellrechnung für die Modulationen der Transmissionskurve eingebracht werden, aber die im Meßverlauf noch überlagerten weiteren störenden Modulationen im mathematischen Modell für die Anpassungskurve einfach nicht berücksichtigt werden. Die zusätzlich berücksichtigten, auf Mehrfachreflexionen im Flüssigkristallmaterial zurückgehenden Modulationen weisen zwar aufgrund ihrer vergleichsweise geringen Modulationsperiode (über dem Lichteinfallswinkel) eine stärkere Abhängigkeit von der Flüssigkristall-Schichtdicke auf, aber sie sind auch von dem primär interessierenden Anstellwinkel abhängig, weshalb dessen Berücksichtigung zusätzlich zu den dominierenden Modulationen durch Doppelbrechung in der Transmissionsberechnung sinnvoll ist und zu zuverlässigeren Ergebnissen führt. Wenn allerdings die Dicke des Flüssigkristallschicht nicht aus anderweitigen Messungen genau bekannt ist, sondern falsch angenommen wird, dann kann die Veränderung der Tiltwinkel-Vorgabe allein nicht zum korrekten Ergebnis führen, dann muß eine iterative Anpassung auch der Schichtdicke erfolgen. Zweckmäßigerweise werden bei der rein doppelbrechungsbedingten Modulation Dicke und Anstellwinkel der Flüssigkristallschicht als simultan variabel behandelt. Zusammen mit dem Anstellwinkel auf der Onenderungsschicht läßt sich jedenfalls so auch die für die Modulationseffekte durch Doppelbrechung maßgebliche Dicke der Flüssigkristallschicht aus dem an den gemessenen Verlauf angepaßten Ergebnis der Modellkurvenberechnung ableiten.

Um den Transmissionsverlauf auch an einer dünnen, z.B. aus der laufenden Produktion entnommenen Flüssigktistallzelle zu bestimmen, werden gemäß vorliegender Erfindung also Transmissionsmodulationen berücksichtigt, die auf Mehrfachreflexionen in der Flüssigkristallschicht beruhen. Die aus der Modellrechnung gewinnbare Transmissionskurve, welche auf jeden Fall die durch Doppelbrechung und für sehr dünne Zellen dann auch wenigstens noch diese durch Mehrfachreflexionen in der Flüssigkristallschicht bedingten Modulationen enthält, wird dem vorgegebenen da real gemessenen Transmissionsverlauf numerisch angepaßt. Dabei werden die interessierenden freien Parameter iterativ so lange variiert, bis eine optimale quantitative Entsprechung zwischen dem gemessenen Verlauf und der ohne den Einfluß störender Modulationsanteile berechneten Kurve der Transmission als Funktion des Lichteinfallswinkels erzielt ist. Der, für die numerische Anpassung einer mit dem optischen Modell berechneten Kurve an den durch die Zelle selbst gemessenen Verlauf, zu variierende Beiwert ist also insbesondere der Anstellwinkel auf der Orientierungsschicht in der Zelle. Falls die Dicke der Flüssigkristallschicht nicht - etwa aus einer anderen, unabhängigen Messung - mit hinreichender Genauigkeit bekannt ist, kann auch diese in der Modellberechnung systematisch variiert werden, um zu einer guten Anpassung zwischen Messung und Berechnung zu gelangen, woraus dann auch auf diese Dicke zu schließen ist. Denn diejenigen Beiwerte, für die sich gerade eine optimale Anpassung der berechneten Kurve an den gemessenen Verlauf einstellt, sind die gesuchten Informationen über die reale Auslegung der betrachteten Zelle von grundsätzlich beliebiger, aber insbesondere auch sehr geringer Dicke ihrer Flüssigkristallschicht. Dabei kann ohne weiteres in Kauf genommen werden, daß sich so exakt nur der tatsächliche Tilt-Bias- oder Randanstell-Winkel für nicht-verschraubte Strukturen ermitteln läßt. Denn da in verschraubten Strukturen im allgemeinen Fall der Tiltwinkel eine Funktion des Ortes in der Flüssigkristallschicht ist, ergibt jede Meßmethode, die einen durch die gesamte Flüssigkristallschicht transmittierten Lichtstrahl als "Sonde" benutzt, nur den Mittelwert des Tiltwinkels über die Dicke der Flüssigkristallschicht. Dieser ist in der Praxis aber völlig ausreichend für die Produktionskontrolle der heute eingesetzten Flüssigkristall-Anzeigen, die hauptsächlich auf dem Twisted Nematic Effect (TN-Zellen) oder auf dem Supertwisted Nematic Effect (STN-Zellen) beruhen, also keine verdrillungsfreie Flüssigkristallschicht sondern eine Helix-Struktur ihrer Molekularanordnungen aufweisen.

Für den Fall, daß die Zelle zur Aufnahme des Transmissionsverlaufes über dem Strahleinfallswinkel in herkömmlicher Weise relativ zum ortsfesten Lichtstrahl verschwenkt wird, läßt sich die Meßkurve in einem zwischen Null und Neunzig Grad unbeschränkten Meßbereich für die Bestimmung der gesuchten Kenngröße "Tiltwinkel" realisieren. Stattdessen - und insoweit apparativ einfacher - läßt eine "Kristall-Rotation" zur Aufnahme des Meßverlaufes sich aber auch dadurch verwirklichen, daß die Zelle ebenfalls stationär angeordnet wird, nämlich zwischen einer stationären Quelle für monochromatisches Licht und einer Linse mit besonders hohem Öffnungsverhältnis, und dabei in der vorderen Linsen-Brennebene mit parallel zu derer optischen Achse orientierter Zellennormalen. Von rückwärtig gegenüberliegend wird die Zelle im jeweiligen Meßpunkt konvergent durchstrahlt, z.B. durch eine ausgedehnte diffuse Quelle oder durch einen im Meßpunkt fökussierten konvergenten Strahl. Dadurch stellt sich in der hinteren Brennebene der Linse nach dem konoskopischen Prinzip (wie es etwa in der DE 196 02 862 C1 näher erläutert ist) eine Intensitätsverteilung ein, die über einen parallel zur Orientierung der optischen Achse des Flüssigkristalles liegenden Durchmesser die prinzipiell gleiche vom Strahldurchtrittswinkel abhängige Intensitätsmodulation zeigt, wie der nach dem Prinzip der mechanischen Rotation gemessene Verlauf. In dieser stationären Anordnung bestimmt dann natürlich die numerische Apertur der Linse bzw. des konoskopischen Linsensystemes die Grenzen des Winkels, unter dem das Licht die Zelle durchstrahlen kann.

Zusätzliche Einzelheiten und Weiterbildungen zur Erfindung ergeben sich aus den Unteransprüchen und aus nachstehender Zeichnungsbeschreibung. In der Zeichnung ist das Verfahren anhand dessen Ausübung symbolisch vereinfacht skizziert. Es zeigt :
- Fig.1: einen Meßaufbau mit rotierender Zelle im Prinzip,
- Fig.2: einen stationären Meßaufbau mit konoskopischer Technik im Prinzip und
- Fig.3: einen typischen Meßverlauf durch eine dünne Zelle sowie ihm überlagert eine schon gut angepaßte, durch Doppelbrechung modulierte berechnete Transmissionskurve sowie eine noch nicht im Detail angepaßte, unter Berücksichtigung auch von Mehrfachreflexionen in der Flüssigkristallschicht berechnete Kurve der Transmissionsmodulation.

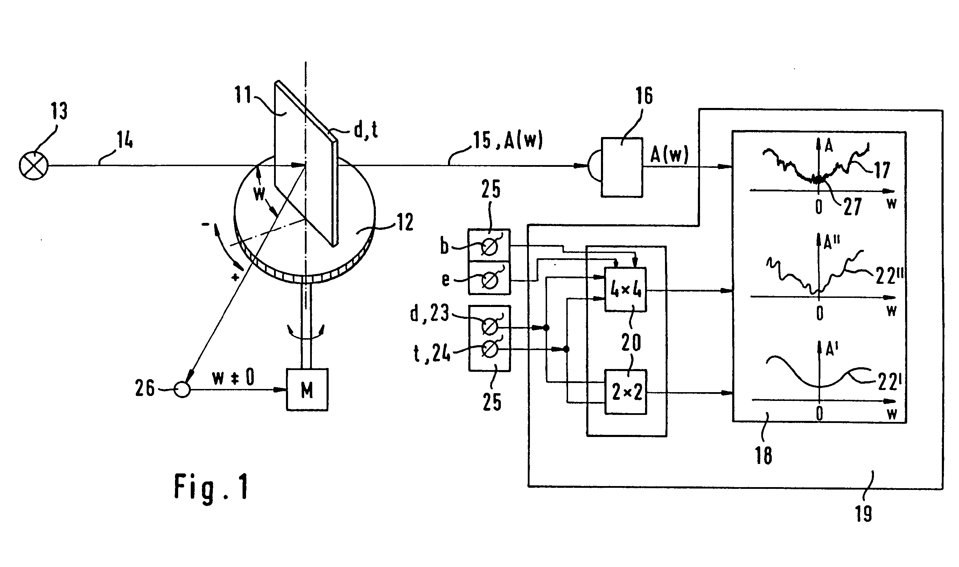

Die zu untersuchende, unmittelbar aus der laufenden Fertigung entnehmbare Flüssigkristall-Zelle 11 kann für ihr körperliches Verschwenken gegenüber einer stationären Lichtquelle 13 zur Aufnahme des Transmissionsverlaufes 17 etwa auf einem Drehtisch 12 gehaltert und unter variablem Lichteinfallswinkel w aus der Quelle 13 mit einem kollimierten Teststrahl 14 (z.B. einem Laserstrahl) beaufschlagt werden (Fig.1); oder der Strahl 14 wird gegenüber einer stationären Zelle 11 verschwenkt. Dabei ist die Schwenkachse immer senkrecht zu der Ebene orientiert, in welcher die optische Achse des nicht-verschraubten Flüssigkristalls liegt; wohingegen die Schwenkachse einer verschraubten Konfiguration senkrecht zu der Ebene der Winkelhalbierenden der Verschraubung steht, d.h. senkrecht zu der Ebene, in welcher die optische Achse des Flüssigkristalles in der Mitte der verschraubten Flüssigkristallschicht liegt. Die genaue Schwenkwinkel-Nullstellung (w=0) des lotrechten Lichteinfalls auf die Zelle 11 wird zweckmäßigerweise aufgrund der Rückreflexion von der Zelle 11 selbst auf einen winkel-selektiven Detektor 26 ermittelt, der z.B. ortsfest in einer bekannten Winkelposition w relativ zum Teststrahl 14 angeordnet ist. Wenn er anspricht, nämlich beim einkanaligen Detektor mit Erreichen des durch die Schärfe des Maximums definierten Winkels, muß die Zelle 11 noch um diesen Winkel w weitergeschwenkt werden, um die Nullstellung einzunehmen, in welcher der Teststrahl 14 in sich selbst reflektiert wird. Es kann aber auch ein selbst hoch-winkelauflösender Detektor 26 Anwendung finden, etwa wie er in der eigenen deutschen Patentanmeldung 196 37 131.7 vom 12.09.96 mit einem konoskopischen Linsensystem beschrieben wurde; oder in wesentlich einfacherer Bauform ein mehrkanaliger Detektor, dessen Kanäle je nach der momentanen Winkelposition angeregt werden. Zur Verstärkung interferenzbedingter Transmissionsmodulationen kann die Wellenlänge des aus der Quelle 13 auf die Zelle 11 fallenden Lichtstrahles 14 variiert werden.

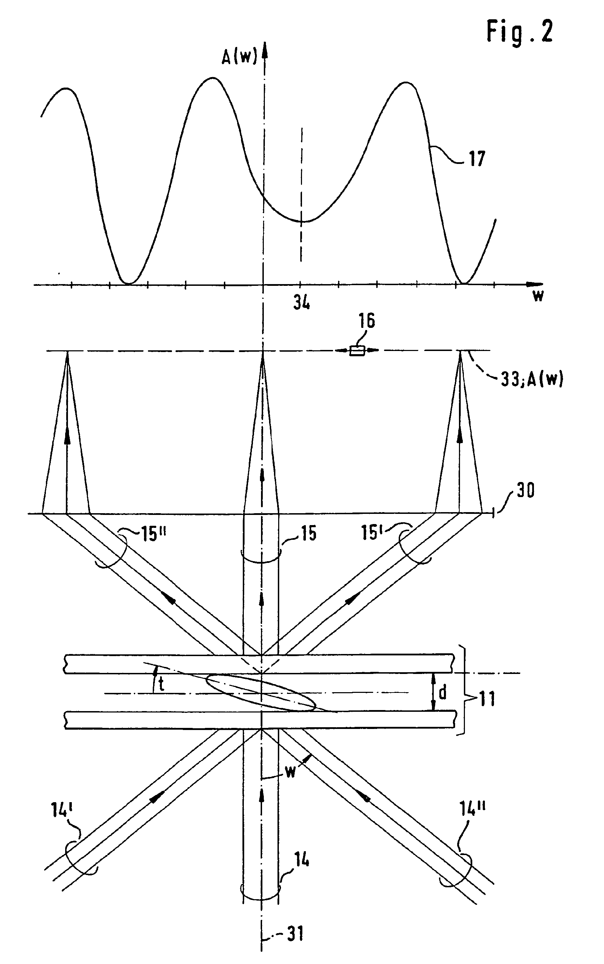

Bei der voll-stationären Meßanordnung gemäß Fig.2, basierend auf dem konoskopischen Prinzip, kann die Winkelkalibration dadurch erfolgen, daß die Rückstrahliichtung eines schräg, unter bekanntem Winkel w auf die Zelle 11 fallenden Strahles 14 (vgl, Fig.1) gemessen wird, um dann die gegebene Vorjustage der Testzelle 11 relativ zur optischen Achse der konoskopischen Optik im Umfang einiger Abweichungsgrade - etwa mittels einer mechanischen Feinjustage - zu korrigieren. Eine Feinstjustage kann dann später noch mittels numerischer Korrektur der Meßwerte erfolgen. Für die konoskopische Messung an einer Zelle 11 gemäß Fig.2, bei der die optische Achse der gleichmäßig ausgerichteten Flüssigkristallschicht den Rand-Anstellwinkel t zu den inneren Substratoberflächen, welche die Orientierungssschicht tragen, einnimmt, wird die Zelle 11 von einem Bündel jeweils in sich paralleler Elementarstrahlen 14, 14', 14" durchleuchtet, die im Meßfleck auf der Zelle 11 konvergieren. Dieses Strahlenbündel kann von einer ausgedehnten, diffus strahlenden Quelle stammen (die dann auch die Umgebung des momentan interessierenden Meßfleckes auf der Zelle 11 beleuchtet und durchstrahlt); oder es wird mittels eines optischen Linsen- oder Spiegelsystemes diskret erzeugt. Gemäß dem konoskopischen Prinzip werden die aus der Zelle 11 winkelabhängig geschwächt austretenden elementaren Meßstrahlen 15, 15', 15" durch eine Linse 30 transformiert, so daß die Abstände ihrer Konvergenzpunkte von der optischen Achse 31 der Linse 30 eine bekannte Funktion des Lichteinfallswinkels w in Luft sind. In der hinteren Brennebene 33 der Linse 30 entsteht dann als Intensitätsverteilung eine sog. Interferenzfigur, in der die Intensität eines jeden Flächenelementes der Intensität eines Meßelementarstrahles 15, 15', 15" entspricht, der unter dem Winkel w die Zelle 11 durchstrahlt. Somit entspricht die in der hinteren Brennebene 33 in der Zeichenebene entstehende Intensitätsverteilung nach entsprechender Berücksichtigung der funktionalen Abhängigkeit zwischen Einfallswinkel w und Abstand von der optischen Achse 31 derjenigen, die bei der körperlichen Rotation gemäß Fig.1 gemessen wird. Diese funktionale Abhängigkeit zwischen dem Abstand von der optischen Achse 31 und dem Einfallswinkel w in Luft ist bei üblicher Konstruktion eines konoskopischen Linsensystemes meist linear, aber das muß nicht sein, viel einfacher läßt sich eine Abhängigkeit gemäß dem Tangens des Einfallswinkels w realisieren und diese nichtlineare Abhängigkeit dann bei den Berechnungen numerisch kompensieren.

Zur Orientierung ist für das gemäß Fig.2 gemessene Beispiel des Transmissionsverlaufes A(w) die Lage der aus dem Nullpunkt heraus verschobenen Pseudo-Symmetrieachse 34 eingetragen. Dieser Intensitätsverlauf A(w) kann z.B. durch einen längs der hinteren Lin sen-Brennebene 33 verschiebbaren Detektor 16 mit kleiner Öffnung gemessen werden, oder aber auch durch eine (gegebenenfalls verkleinerte) Projektion auf ein ein- oder zweidimensionales Detektorarray etwa in Form einer CCD- Zeilen - bzw. Flächen-Kamera, wie als solches von der konoskopischen Methode bekannt.

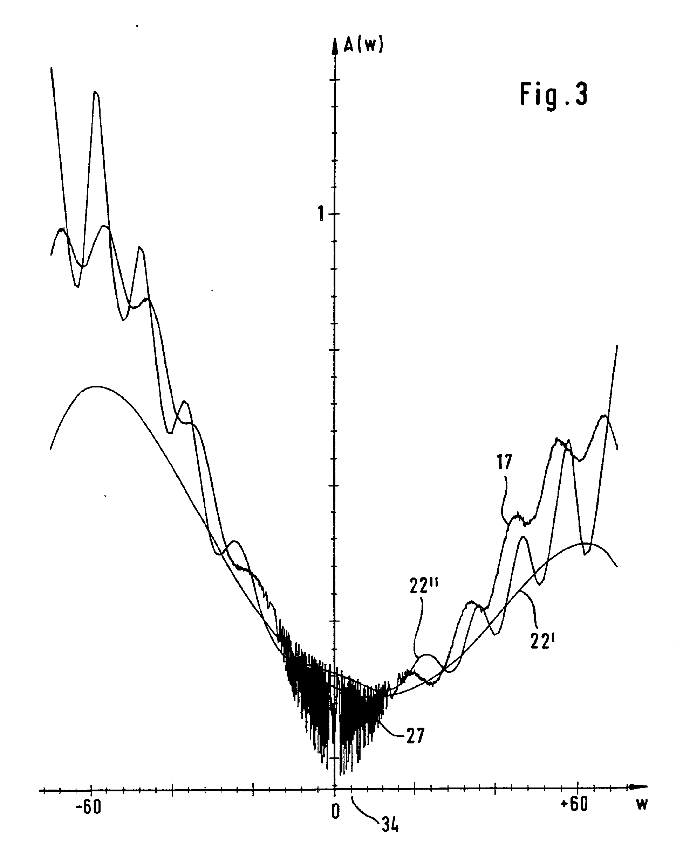

Die Zellen-Transmission A(w), also die verbleibende Strahlintensität im Meßstrahl 15 hinter der Zelle 11, ist unter anderem aufgrund der Doppelbrechungserscheinungen in der Flüssigkristallschicht vom Strahleinfallswinkel w auf die Zelle 11 abhängig. Der entsprechend intensitätsmodulierte Meßstrahl 15 führt also zur winkelabhängigen Anregung A(w) eines optronischen Detektors 16. Die Folge von dessen den einzelnen Winkelwerten w zugeordnet gemessenen Intensitätswerten A(w) zeigt bei Messungen an sehr dünnen Zellen 11 aufgrund sehr kurzperiodischer Interferenzerscheinungen durch Mehrfachreflexionen an den Glas-Luft-Übergängen mit einer intensiven bartähnlichen Ausfransung (bei 27 in Fig. 1 und in Fig.3, in Fig.2 nicht berücksichtigt) einen Verlauf 17 = A(w), der einen "verrauschten" Eindruck erweckt, obwohl tatsächlich nur periodische Modulationen sehr unterschiedlicher Periodenlängen aber ohne echte Rauschanteile einander überlagert sind, wie eine Fourieranalyse zeigt. Jener gemessene Verlauf A(w) wird insgesamt in einem Rechner 19 abgespeichert und optional (wie in Fig.1 berücksichtigt) auf einem Display 18 dargeboten.

Nach der Messung wird im Rechner 19 - anhand eines vorgegebenen mathematischen Modells 20 für das Verhalten der Zelle 11 (unter Vernachlässigung der durch den Abstand der äußeren Glas-Luft-Übergänge bestimmten hochfrequenten Oszillationen 27 aus dem Meßverlauf) - für vorgegebene Parameter die winkelabhängig modulierte Kurve 22' = A'(w) bzw. 22" = A"(w) der Transmissionsmodulation berechnet. Bei Vorliegen einer dicken Testzelle 11 (typisch dicker als 20 µm) kann diese Berechnung der Transmissionskurve 22' = A'(w) auf eine 2x2-Matrix-Methode beschränkt werden, da durch die Erscheinungen der Doppelbrechung in einer dicken Zelle 11 bereits eine hinreichend signifikante Modulation erfolgt. Bei dünnen Zellen 11 dagegen fehlen signifikante Auswirkungen von Doppelbrechungsmodulationen, weshalb für die berechnete Kurve 22" = A"(w) nun weitere Effekte berücksichtigt werden, wie insbesondere Modulationen durch Mehrfachreflexionen in der Flüssigkristallschicht. Die entsprechende Kurve 22" = A"(w) wird mittels einer komplexeren 4x4-Matrix-Methode berechnet, die dann auch die aus Doppelbrechung herrührenden Effekte exakt wiedergibt, indem beide Effekte im mathematischen Modell 20 einander überlagert sind. Bei realistischen Parametern d für die Dicke der Flüssigkristallschicht und t für den Randanstell-winkel ist die Periode der Oszillationen durch Doppelbrechung relativ groß; die Periode der durch interferierende Mehrfachreflexionen verursachten bestrahlungswinkelabhängigen Schwingungen ist verglichen damit eher klein, vgl. Fig.3.

Die Anpassung der berechneten Kurve 22" in Fig.3 an den tatsächlichen Verlauf 17 ist noch nicht optimal; so stimmt die Lage der Extrema (die Phasenlage) noch nicht ausreichend überein. Für eine bessere Anpassung der berechneten Kurve 22" an den gemessenen Verlauf 17 werden im Modell 20 deshalb gemäß einer Weiterbildung vorliegender Erfindung zweckmäßigerweise noch weitere Parameter neben den Effekten der Mehrfachreflexionen in der Flüssigkristallschicht und deren Dicke d berücksichtigt. Solche weiteren Parameter (b bzw. e in Fig.1) sind insbesondere jeweils Dicke und Brechzahl der Orientierungsschichten und / oder der eingangs schon erwähnten durchsichtigen Elektroden. Diese Elektroden sind direkt auf die Glas-Innenflächen aufgebracht. Auf ihnen, also zwischen den Elektroden und der Flüssigkristall-Schicht, befinden sich die den Rand-Anstellwinkel hervorrufenden Orientierungsschichten. Die stehen also in direktem Kontakt mit der Flüssigkristallschicht, zwischen einer Orientierungsschicht und dem Zellglas befinden sich die Elektroden. Völlig außer Betracht bleiben aber im Modell 20 für die Kurvenberechnung 22 = A(w) und somit bei der Kurvenanpassung aber die an sich sehr störenden da sehr hochfrequenten Transmissionsmodulationen, die durch äußere Glas-Luft-Übergänge entstehen, indem im Modell 20 einfach kein Glas berücksichtigt wird.

Für die Modellberechnungen der winkelabhängigen Kurvenverläufe 22', 22" (Fig.1, Fig.3) kann auf Matrizenansätze zurückgegriffen werden, wie sie von Wöhler et al. im Journal of the Optical Society of America (A), Optics and Image Science, Vol.5/No.9/September 1988, Seiten 1554-1557, abgeleitet wurden. Die bei dickeren Zellen 11 auf reine Doppelbrechungserscheinungen im Flüssigkristall zurückzuführende winkelabhängige Transmissionskurve 22' = A'(w) ist mathematisch weniger komplex strukturiert und läßt sich deshalb schon über den Ansatz einer einfacheren, vergleichsweise weniger numerischen Rechenaufwand bedingenden 2x2-Matrix-Methode berechnen. Mit der bei Wöhler dargestellten 4x4-Matrix-Methode läßt sich dann aber auch die Transmission 22" = A"(w) durch eine sehr dünne Testzelle 11 in Abhängigkeit von der Schichtdicke d des Flüssigkristalls und des Anstellwinkels t exakt berechnen, nämlich unter Berücksichtigung neben der Doppelbrechungserscheinungen auch der auf Mehrfachreflexionen in der Flüssigkristallschicht zurückzuführenden Modulationen, die vor allem von der Dicke d der Flüssigkristallschicht abhängig sind. In Fig.1 ist symbolisch vereinfacht berücksichtigt, daß wie schon erwähnt in diesem komplexeren Modell 20 dann zweckmäßigerweise auch weitere Einflußgrößen wie vor allem hinsichtlich der transparenten Elektroden e und/oder der Orientierungsschicht b berücksichtigt werden, um zu einer besseren Anpassung der berechneten Kurve 22" an den tatsächlichen Verlauf 17 zu gelangen. Deren Berücksichtigung zusätzlich zu den Modulationen durch Mehrfachreflexionen in der Flüssigkristallschicht führt nicht zu einem unzumutbar langen Zeitbedarf für die Iterationsrechnungen wegen Ansteigens auf sechs freie Variable, wenn zunächst nur jeweils Schichtdicke oder Brechzahl der weiteren Schichten zur Anpassung verwendet werden, was zulässig ist, da diese Schichten in guter Näherung aus den isotropen (also nicht doppelbrechenden) Materialien ITO bzw. Polyimid bestehen.

Bei der Realisierung eines erfindungsgemäß arbeitenden Meßgerätes wird zweckmäßigerwese zuerst der gemessene Verlauf 17 = a(w) auf einem Bildschirm dargestellt. Daraus sind für den erfahrenen Praktiker schon manche in der Fertigung oder während der Messung etwa aufgetretene typische Fehler erkennbar. Für die Kurvenberechnung A'(w) oder A"(w) werden sodann die Brechzahlen des in der Zelle 11 eingesetzten Flüssigkristallmaterials aus einer Datenbank eingelesen oder manuell eingegeben. Diese Berechnung erfolgt automatisch iterativ, um schließlich die in ihrem Verlauf am besten zum gemessenen Verlauf 17 passende Kurve 22' im gleichen Maßstab darzustellen. Denn in der Praxis erfolgt zunächst die Berechnung A'(w) mit der schneller ablaufenden 2x2-Matrix-Methode, um nur die auf Doppelbrechung zurückgehende Transmissionskurve 22' zu berechnen. Damit läßt sich schon eine hinreichende Übereinstimmung erzielen, wenn die Zelle 11 nicht zu dünn ist, wenn also Mehrfachreflexionen noch nicht dominieren. Andernfalls wird die Berechnung mit der 4x4-Matrix-Methode wiederholt. Auch dabei werden die Berechnungen A"(w) so oft mit unterschiedlichen Vorgaben für die freien Zellen-Beiwerte "Dicke" 23 = d und/oder (Tilt-) "Winkel" 24 = t und gegebenenfalls zusätzlich mit Variationen der erwähnten zusätzlichen Beiwerte wiederholt, bis wieder eine optimale Anpassung der nun berechneten Kurve 22" an den aktuell gemessenen Verlauf 17 erzielt ist.

Dieses angestrebte Ergebnis kann im Rechner 19 mittels eines üblichen Iterations-Rechenprogrammes etwa auf Basis mittlerer quadratischer Fehlerminimierung automatisch ablaufend erreicht werden. Die im Ergebnis am Einstellorgan 25 nun als aktuelle Berechnungsvorgabe ablesbaren Beiwerte sind dann die gesuchten da für das optische Verhalten maßgeblichen Informationen über die Zelle 11.

Zur Bestimmung des Anstellwinkels t auf der Orienderungsschicht in ein Flüssigkristall-Zelle 11 wird nicht der aus dem Koordinaten-Nullpunkt verschobene Pseudo-Symmetriewinkel 34 (Fig.2, Fig.3) in einem vom Bestrahlungswinkel w abhängigen Transmissionsverlauf 17 = A(w) ermittelt; sondern anhand eines mathematischen Zellen-Modelles 20 werden die von den Doppelbrechungseigenschaften und - zur Anpassung bei dünnen Zellen 11 - auch wenigstens die von Mehrfachreflexionen im Flüssigicristallmaterial der Zelle 11 herrührenden winkelabhängigen Modulationen der Transmissionskurven A' bzw. A" über dem Bestrahlungswinkel w berechnet. Dadurch ist das Verfahren insbesondere auch auf sehr dünne, direkt aus der Fertigungslinie entnommene Zellen 11 unmittelbar anwendbar. Die freien Berechnungsparameter sind vor allem die Dicke d der Flüssigkristallschicht in der Zelle 11 und deren (Rand-)Anstellwinkel t auf der Orientierungsschicht an den Zellenglas-Innenflächen bei nicht-verschraubter - bzw. sein mittlerer Anstellwinkel bei verschraubter - Flüssigkristall-Textur in der Zelle 11; und erforderlichenfalls auch jeweils Schichtdicke und Brechzahl der transparenten Elektroden e und der Orientierungsschichten b. Wenn jene Parameter im Zuge von auch automatisch durchführbaren Iterationsberechnungen schließlich so eingestellt sind, daß sich eine optimale quantitative Übereinstimmung der einander überlagerten Berechnungskurve 17 mit dem gemessenen Verlauf 22' oder 22" ergibt, handelt es sich bei den aktuell in die Modellberechnung eingehenden Parametern um die gesuchten Kenngrößen der Zelle 11. Da nun also keine Symmetrieeigenschaften im Verlauf der Funktionen A(w) mehr ausgewertet werden müssen, ist das erfindungsgemäße Verfahren auch nicht auf kleine Werte des Anstellwinkels t auf der Orientierungsschicht bzw. auf kleine mittlere Tiltwinkel beschrankt. Die bei der Messung gerade in diesem Bereich kleiner Werte bei dünnen Zellen 11 auftretenden starken Oszillationen 27, die eine geometrische Auswertung eines an einer sehr dünnen Zelle 11 gemessenen Verlaufes 17 = A(w) stark behindern, stören nun nicht mehr, da sie in der angepaßt berechneten Modell-Kurve 22' bzw. 22" nicht enthalten sind, weil ihre auf Glasinterferenzen zurückgehenden Ursachen im mathematischen Modell gerade deshalb bewußt ignoriert werden.

## Patentansprüche

1. Verfahren zum Bestimmen von Beiwerten, die für das optisches Verhalten und deshalb für die Auslegung einer Flüssigkristall-Zelle charakteristisch sind, wie insbesondere des Anstellwinkels der Flüssigkristall-Moleküle in der Zelle und gegebenenfalls auch ihrer Flüssigkristall-Schichtdicke, durch Vergleich von an einer gegeben Zelle in Abhängigkeit von einem variierenden Bestrahlungswinkel gemessenen Transmissionsverlauf ohne Berücksichtigung etwaiger Symmetrieeigenschaften diesen Verlaufes mit einer aufgrund eines mathematischen Modells über das Verhalten der Zelle in Abhängigkeit von ihrem Bestrahlungswinkel für vorgegebene Beiwerte berechneten Kurve der Transmission, in der neben Doppelbrechungs-Effekten in der Flüssigkristalischicht der Zelle auch Modulations-Effekte aufgrund von Mehrfachreflexionen berücksichtigt werden, die sich in einer dünnen Flüssigkristallschicht auswirken, wobei die berechnete Kurve durch Änderung wenigstens eines der Beiwerte variiert wird, bis eine gute Anpassung der berechneten Kurve der Transmission an den gemessenen Verlauf der Transmission erzielt ist, woraufhin der für diese Anpassung vorgegebene Beiwert wie insbesondere der Anstellwinkel und gegebenenfalls auch die Schichtdicke als der aktuell zu bestimmende Beiwert der gegebenen Zelle ausgelesen wird, ***dadurch gekennzeichnet, daß*** zur Bestimmung der allein auf Doppelbrechung beruhenden Modulation der Transmission durch die Zelle eine 2x2-Matrix-Methode, dagegen zur Bestimmung der zusätzlich auf Mehrfachreflexionen in der Flüssigkristallschicht der Zelle beruhenden Modulation der Transmission durch die Zelle eine 4x4-Matrix-Methode zum Einsatz kommt.

2. Verfahren nach Anspruch 1, ***dadurch gekennzeichnet, daß*** zunächst eine nur durch Doppelbrechungseffekte in der Flüssigkristallschicht der Zelle modulierte Transmissionskurve und erforderlichenfalls dann die zusätzlich durch Mehrfachreflexionseffekte in der Flüssigkristallschicht der Zelle modulierte Transmissionskurve berechnet und dem an der Zelle gemessenen Transmissionsverlauf angepaßt wird.

3. Verfahren nach Anspruch 1 oder 2, ***dadurch gekennzeichnet., daß*** als systematisch zu variierender Beiwert der Rand-Anstellwinkel bei bekannter Dicke oder zusätzlich die Dicke der Flüssigkristallschicht in der Zelle in die Modellberechnung eingeht.

4. Verfahren nach einem der vorangehenden Ansprüche, ***dadurch gekennzeichnet., daß*** die Brechzahlen des Flüssigkristalls in der Zelle als bekannte Beiwerte in die Modellberechnung der Transmissionskurve eingebracht werden, und erforderlichenfalls zu weiterer, verbesserter Anpassung der berechneten Kurve an den gemessenen Verlauf die Dicke und Brechzahl des Materials der Orientierungsschichten und/oder des Materials der transparenten Elektroden auf den Zellgläsern.

5. Verfahren nach einem der vorangehenden Ansprüche, ***dadurch gekennzeichnet, daß*** die Anpassungs-Modellberechnung iterativ numerisch erfolgt.

6. Verfahren nach einem der vorangehenden Ansprüche, ***dadurch gekennzeichnet, daß*** für eine iterative Modellberechnung der vom Einfallswinkel abhängigen Transmission durch die Zelle der Anstellwinkel auf der Orientierungsschicht in einer nicht-verschraubten Flüssigkristall-Konfiguration variiert wird.

7. Verfahren nach einem der vorangehenden Ansprüche, ***dadurch gekennzeichnet,. daß*** für eine iterative Modellberechnung der vom Einfallswinkel abhängigen Transmission durch die Zelle der mittlere Anstellwinkel einer verschraubten Flüssigkristall-Konfiguration variiert wird.

8. Verfahren nach einem der vorangehenden Ansprüche, ***dadurch gekennzeichnet, daß*** für ein Kalibrieren der Lichteinfallsrichtung auf die Zelle die Richtung des von der Zelle reflektierten Strahles ausgewertet wird.

9. Verfahren nach einem der vorangehenden Ansprüche, ***dadurch gekennzeichnet, daß*** zur Verstärkung interferenzbedingter Transmissionsmodulationen die Wellenlänge des auf die Zelle fallenden Lichtstrahles variiert wird.

10. Verfahren nach einem der vorangehenden Ansprüche, ***dadurch gekennzeichnet, daß*** zur Aufnahme ihres gemessenen Transmissionsverlaufes die Zelle zwischen einer Quelle für monochromatisches Licht und einer Linse mit hohem Öffnungsverhältnis, nämlich in der vorderen Linsen-Brennebene mit parallel zu deren optischer Achse orientierter Zellnormaler, angeordnet und rückwärtig in Meßpunkten konvergent durchstrahlt wird.

## Claims

1. Method for determining coefficients characteristic of the optical behaviour, and therefore of the design of a liquid crystal cell such as, in particular, of the tilt angle of the liquid crystal molecules in the cell and, if appropriate, also of their liquid crystal layer thickness, by comparing a transmission profile, measured at a given cell as a function of a varying irradiation angle, without taking account of any possible symmetry properties of this profile with a transmission curve calculated on the basis of a mathematical model via the behaviour of the cell as a function of its irradiation angle for prescribed coefficients, in which in addition to birefringence effects in the liquid crystal layer of the cell, account is also taken of modulation effects based on multiple reflections which have an effect in a thin liquid crystal layer, the calculated curve being varied by changing at least one of the coefficients until a good adaptation of the calculated curve of the transmission to the measured profile of the transmission is achieved, whereupon the coefficient prescribed for this adaptation such as, in particular, the tilt angle and, if appropriate, also the layer thickness is/are selected as the coefficient of the given cell that is currently to be determined, **characterized in that** a 2x2 matrix method is used to determine the modulation, based solely on birefringence, of the transmission through the cell, whereas use is made of a 4x4 matrix method in order to determine the modulation, additionally based on multiple reflections in the liquid crystal layer of the cell, of the transmission through the cell.

2. Method according to Claim 1, **characterized in that** firstly a transmission curve modulated only by birefringence effects in the liquid crystal layer of the cell is calculated and, if appropriate, then the transmission curve additionally modulated by multiple reflection effects in the liquid crystal layer of the cell is calculated and adapted to the transmission profile measured at the cell.

3. Method according to Claim 1 or 2, **characterized in that** the edge tilt angle given a known thickness or, in addition, the thickness of the liquid crystal layer in the cell features in the model calculation as coefficient to be systematically varied.

4. Method according to one of the preceding claims, **characterized in that** the refractive indices of the liquid crystal in the cell are introduced as known coefficients into the model calculation of the transmission curve and, if required, the thickness and refractive index of the material of the orientation layers and/or of the material of the transparent electrodes on the cell glasses is introduced for the purpose of further, improved adaptation of the calculated curve to the measured profile.

5. Method according to one of the preceding claims, **characterized in that** the adaptation model calculation is performed numerically in an iterative fashion.

6. Method according to one of the preceding claims, **characterized in that** the tilt angle on the orientation layer is varied in an untwisted liquid crystal configuration for the purpose of an iterative model calculation of the transmission, dependent on the incidence angle, through the cell.

7. Method according to one of the preceding claims, **characterized in that** the mean tilt angle of a twisted liquid crystal configuration is varied for the purpose of an iterative model calculation of the transmission, dependent on the incidence angle, through the cell.

8. Method according to one of the preceding claims, **characterized in that** the direction of the beam reflected by the cell is evaluated for calibrating the direction of light incidence on the cell.

9. Method according to one of the preceding claims, **characterized in that** the wavelength of the light beam falling onto the cell is varied in order to amplify instances of interference-induced transmission modulations.

10. Method according to one of the preceding claims, **characterized in that** in order to record its measured transmission profile the cell is arranged between a source for monochromatic light and a lens with a high aperture ratio, specifically in the front lens focal plane with a cell normal orientated parallel to the optical axis thereof, and is convergently transirradiated at measuring points from the rear.

## Revendications

1. Procédé pour déterminer des coefficients qui sont caractéristiques du comportement optique et donc pour la conception d'une cellule à cristaux liquides, comme notamment l'angle d'incidence des molécules de cristaux liquides dans la cellule et le cas échéant aussi l'épaisseur de sa couche de cristaux liquides, par comparaison de l'évolution de la transmission mesurée dans une cellule donnée en fonction d'un angle d'illumination variable sans considérer une éventuelle caractéristique de symétrie de cette évolution, avec une courbe de transmission calculée pour des coefficients définis basée sur un modèle mathématique du comportement de la cellule en fonction de son angle d'illumination, dans laquelle en plus des effets de double réfraction dans la couche de cristaux liquides de la cellule, on tient aussi compte des effets de modulation basés sur les réflexions multiples qui s'exercent dans une fine couche de cristaux liquides, la courbe calculée subissant une variation en modifiant au moins un des coefficients jusqu'à obtenir un bon ajustement de la courbe de transmission calculée avec l'évolution mesurée de la transmission, après quoi on lit le coefficient défini pour cet ajustement, comme notamment l'angle d'incidence et le cas échéant aussi l'épaisseur de la couche, comme étant le coefficient actuel à définir de la cellule donnée, **caractérisé en ce que** pour la détermination de la modulation de la transmission à travers la cellule reposant uniquement sur la double réfraction, on met en oeuvre une méthode matricielle 2x2, alors que pour la détermination de la modulation supplémentaire de la transmission à travers la cellule reposant sur des réflexions multiples dans la couche de cristaux liquides, on met en oeuvre une méthode matricielle 4x4.

2. Procédé selon la revendication 1, **caractérisé en ce qu'**on calcule d'abord une courbe de transmission modulée uniquement par des effets de double réfraction dans la couche de cristaux liquides de la cellule, et si nécessaire on calcule ensuite la courbe de transmission modulée par les effets supplémentaires des réflexions multiples dans la couche de cristaux liquides de la cellule, et qu'on l'ajuste à l'évolution de la transmission mesurée dans la cellule.

3. Procédé selon la revendication 1 ou 2, **caractérisé en ce que** lors des variations des coefficients, on fait intervenir de manière systématique dans le calcul du modèle, l'angle d'incidence limite dans le cas d'une épaisseur connue ou en plus d'une épaisseur de la couche de cristaux liquides dans la cellule.

4. Procédé selon une des revendications précédentes, **caractérisé en ce que** les valeurs de réfraction des cristaux liquides dans la cellule sont introduites comme coefficients connus dans le calcul du modèle de la courbe de transmission et si nécessaire pour un ajustement ultérieur amélioré de la courbe calculée sur l'évolution mesurée, l'épaisseur et la valeur de la réfraction du matériau des couches d'orientation et/ou du matériau des électrodes transparentes sur les verres des cellules.

5. Procédé selon une des revendications précédentes, **caractérisé en ce que** le calcul du modèle d'ajustement est effectué numériquement de manière itérative.

6. Procédé selon une des revendications précédentes, **caractérisé en ce que** pour un calcul itératif du modèle de la transmission à travers la cellule dépendant de l'angle de pénétration, on fait varier l'angle d'incidence sur la couche d'orientation dans une configuration non vissée des cristaux liquides.

7. Procédé selon une des revendications précédentes, **caractérisé en ce que** pour un calcul itératif du modèle de la transmission à travers la cellule dépendant de l'angle de pénétration, on fait varier l'angle d'incidence moyen dans une configuration vissée des cristaux liquides.

8. Procédé selon une des revendications précédentes, **caractérisé en ce qu'**on exploite la direction du faisceau réfléchi par la cellule pour un calibrage de la direction de pénétration de la lumière sur la cellule.

9. Procédé selon une des revendications précédentes, **caractérisé en ce qu'**on fait varier la longueur d'onde du faisceau lumineux incident sur la cellule pour amplifier les modulations de la transmission conditionnées par les interférences.

10. Procédé selon une des revendications précédentes, **caractérisé en ce que** pour l'enregistrement de son évolution mesurée de la transmission, la cellule est disposée entre une source de lumière monochromatique et une lentille à grand rapport d'ouverture, à savoir disposée dans le plan focal avant de la lentille avec une normale à la cellule orientée parallèlement à son axe et traversée vers l'arrière par un faisceau convergent à des points de mesure.
